# EUROPEAN PATENT APPLICATION

(11) **EP 1 939 075 A1**
(43) Date of publication of application: **02.07.2008**
(21) Application number: 07380384.3
(22) Date of filing: 27.12.2007
(51) Int. Cl.: B62D 25/16

(54) **Support for vehicle fenders**

(30) Priority: 28.12.2006 ES 200602804 U
(71) Applicant: Seat, S.A., 08760 Martorell, Barcelona (ES)
(72) Inventor: Delgado Plaza, Pedro c/o Seat, S.A., 08760 Martorell (Barcelona) (ES); Sanchez Lopez, Antonio c/o Seat, S.A., 08760 Martorell (Barcelona) (ES); Caballero Aria, Francisco c/o Seat, S.A., 08760 Martorell (Barcelona) (ES)
(74) Representative: Carvajal y Urquijo, Isabel

(57) **Abstract**

The invention relates to a support for vehicle fenders formed by a part in which two deep grooves are defined, one that is less wide (6) intended to receive an upper peripheral fold (7) of the fender (1), and the other wider groove (9) intended to receive the lower edge (10) of the hood (3). This part has a lateral flange (11) with an opening (12) to fix it to the front-end of the vehicle.

## Description

### Object of the Invention

The present invention relates to a support that has been especially conceived for fixing the fender of a vehicle to the body thereof at the time of assembling the automobile.

The object of the invention is to achieve a considerable simplification in said fixing, especially in fenders with a pointed formation in which the availability of space for the hood is minimal.

The invention is therefore comprised in the scope of the automobile industry and the support guarantees the correct positioning of the fender at the time of assembling the automobile.

### Background of the Invention

As is known fenders with a pointed formation must carry the support near the sharp end in order to guarantee the amount of the clearance with the hood. This part can not be located at such end since it does not have enough surface of support on the bodywork, which is why it is necessary to have an additional part including this support, thus preventing the risk of deformation in the fender.

On occasions the support of the fender is a component of the part, which can cause a very complex assembly process.

The current design trend requires an additional part in which the fixing support is incorporated for assembling this type of pointed fenders, but evidently said additional part is not desirable since its very existence has a negative effect at the cost level, complicating the assembly.

### Description of the Invention

The support that the invention proposes fully and satisfactorily solves the problem previously set forth, forming an autonomous element fixed to the front-end of the vehicle, on which the fender is in turn fixed and on which the hood is further fitted thus establishing the due continuity with the mentioned fender.

To that end and more specifically said support is formed by means of a one-piece body in which two laterally adjacent deep grooves are provided, one intended to receive the corresponding edge of the fender, specifically the upper peripheral fold reinforcing such fender, whereas the second groove, arranged more internally, is intended to receive the peripheral area of the hood and have a profile suited to that of the framework of said hood.

The mentioned one-piece body with the two mentioned grooves is extended laterally on a perforated flange to fix it by screwing or riveting it to the front-end of the vehicle.

### Description of the Drawings

To complement the description being made and for the purpose of aiding to better understand the features of the invention according to a preferred practical embodiment thereof, a set of drawings is attached as an integral part of said specification, in which the following has been shown with an illustrative and non-limiting character.

Figure 1 shows a schematic plan view of a the left part of the front-end of a vehicle provided with a pointed fender and with the support for fixing said fender forming the object of the present invention.

Figure 2 shows a perspective view of a detail of the mentioned support for the fenders isolated from the vehicle.

Figure 3 shows a perspective view of the same detail of Figure 1 with the hood of the vehicle open.

Figure 4 shows a view similar to that of Figure 3 but in which the hood of the vehicle is closed.

Figure 5 finally shows an A-A section of the front-end of the vehicle according to the section line indicated in Figure 1.

### Preferred Embodiment of the Invention

In view of the figures indicated it can be observed how the support proposed is intended for pointed fenders (1), i.e. with very little height in their front end forming a vertex of little width, which must be fixed to the front-end (2) of the vehicle and which must provide surface continuity with the outer face (3) of the hood or covering of the framework (4) thereof.

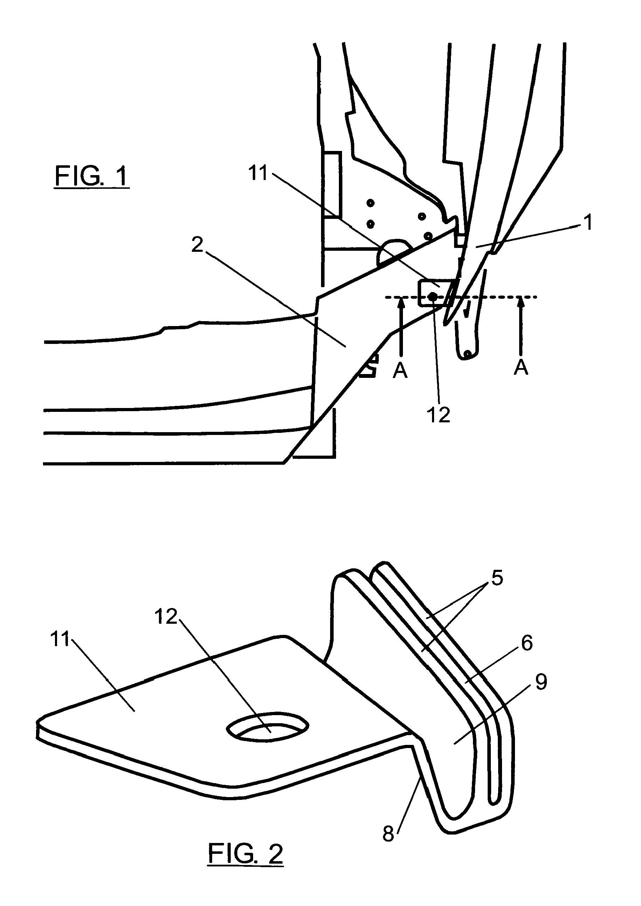

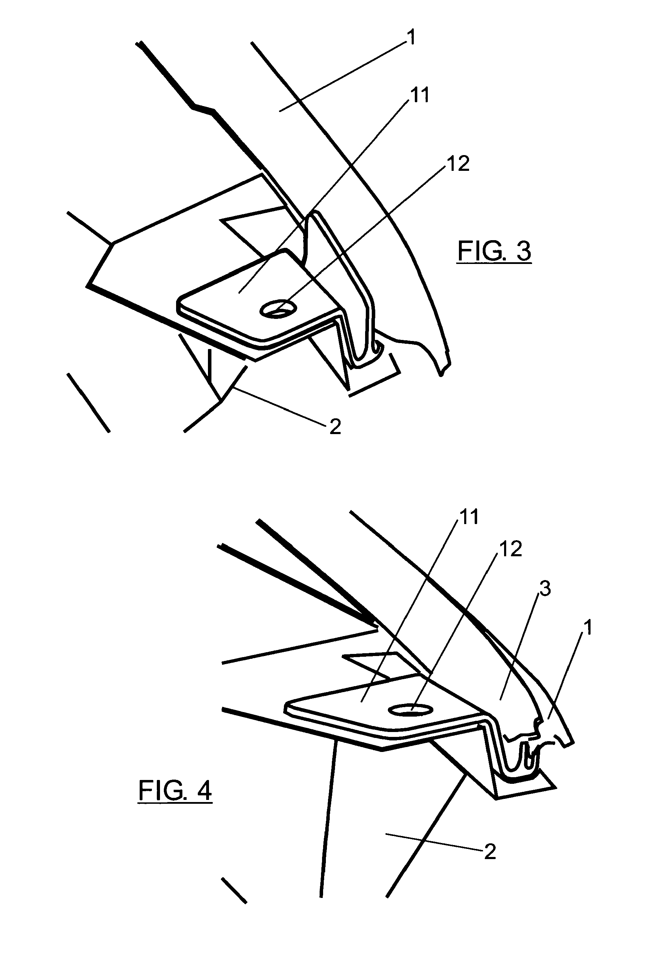

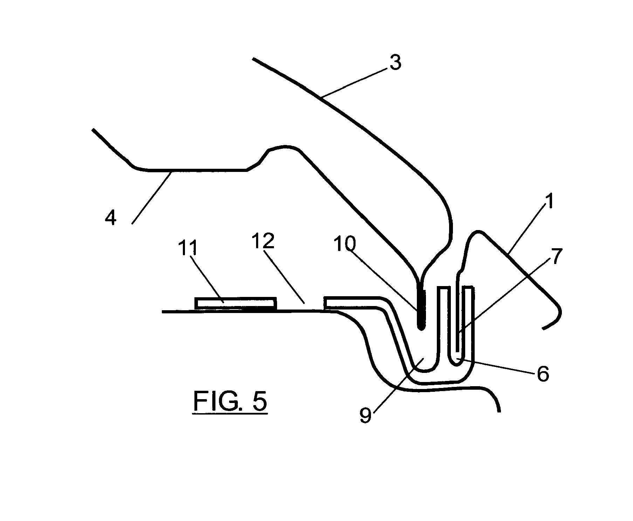

The support proposed, perfectly visible in Figure 2, consists of a one-piece body in which a pair of very close parallel partitions (5) establish a deep groove (6) in which the classic lower inner fold (7) of the fender (1) is coupled, as observed in the section of Figure 5, in a position closest to the pointed front end of said fender (1), as in turn is observed in Figure 4.

The mentioned support shown in detail in Figure 2, in addition to the two mentioned partitions (5) defining the groove (6), have a third partition (8) defining another deep groove (9) with one of the previous grooves, in this case diverging towards its opening intended to receive the edge (10) of the hood (3) as is also observed in mentioned Figure 5.

Finally the partition (8) and after a dihedral bend extends into a flange (11) provided with an opening (12) to fix it by screwing it to the front-end (2) of the vehicle.

## Claims

1. A support for vehicle fenders especially known for pointed fenders (1), finished on their front end in a sharp vertex and with little height in this area, **characterized by** being formed by means of a one-piece body preferably obtained from plastic material in which two deep laterally adjacent grooves (6-9) are defined, one groove (6) dimensionally suitable for tightly receiving within the upper peripheral fold (7) and bent under the fender and the other groove (9) receiving the likewise peripheral edge (10) of the hood, said part extending into a lateral flange (11) provided with an opening (12) to fix it by screwing it to the front-end (2) of the vehicle.
